# EUROPÄISCHE PATENTSCHRIFT

(11) **EP 1 404 119 B1**
(45) Veröffentlichungstag und Bekanntmachung des Hinweises auf die Patenterteilung: **19.04.2006**
(21) Anmeldenummer: 03019823.8
(22) Anmeldetag: 30.08.2003
(51) Int. Cl.: H04N 3/15, H04N 5/225

(54) **Kameramodul und Verfahren zum elektronischen Aufnehmen von Bildern**
Camera module and electronic image pick-up method
Module de caméra et procédé de prise d'images électroniques

(30) Priorität: 30.09.2002 DE 10246368
(43) Veröffentlichungstag der Anmeldung: 31.03.2004
(73) Patentinhaber: INSTITUT FÜR MIKROELEKTRONIK STUTTGART, 70569 Stuttgart (DE)
(72) Erfinder: Höfflinger, Bernd, Prof. Dr., 71063 Sindelfingen (DE); Kober, Hans-Georg, 75391 Gechingen (DE)
(74) Vertreter: Duhme, Torsten

(56) Entgegenhaltungen:
- EP-A- 0 414 109
- US-A- 3 925 657
- US-A- 4 359 759
- US-A- 5 608 204

## Beschreibung

Die vorliegende Erfindung betrifft ein Kameramodul zur elektronischen Aufnahme von Bildern, mit einem Bildsensor mit einer Vielzahl von Bildzellen, die abhängig von der Intensität einfallenden Lichts jeweils ein elektrisches Bildsignal liefern, wobei jede Bildzelle ein lichtempfindliches Element zum Erzeugen eines lichtabhängigen Stroms sowie zumindest einen seriell dazu angeordneten MOS-Transistor aufweist, dessen Gate auf einem festen Potential liegt und dessen Source-Drain-Strecke von dem lichtabhängigen Strom durchflossen wird.

Die Erfindung betrifft ferner ein Verfahren zum elektronischen Aufnehmen von Bildern mit einem Bildsensor, der eine Vielzahl von Bildzellen besitzt, mit den Schritten:
- Erzeugen eines lichtabhängigen Stroms mit Hilfe eines lichtempfindlichen Elements in jeder der Bildzellen,
- Erzeugen eines elektrischen Bildsignals in jeder der Bildzellen mit Hilfe eines seriell zu dem lichtempfindlichen Element angeordneten MOS-Transistors, dessen Gate auf einem festen Potential liegt und dessen Source-Drain-Strecke von dem lichtabhängigen Strom durchflossen wird, und
- Auslesen der elektrischen Bildsignale aller Bildzellen.

Ein Bildsensor für ein solches Kameramodul und ein solches Verfahren sind beispielsweise aus der EP 0 632 930 B1 bekannt.

Bildsensoren zur elektronischen Aufnahme von Bildern finden bereits seit einigen Jahren kommerzielle Anwendung in sogenannten Digitalkameras. Die Bildsensoren besitzen eine Vielzahl, matrixartig zueinander angeordneter Bildzellen, die häufig auch als Pixel bezeichnet werden. Die einzelnen Bildzellen erzeugen in Abhängigkeit von der Intensität einfallenden Lichtes ein zunächst analoges elektrisches Bildsignal, das nachfolgend mit einem Analog-Digital-Wandler in ein digitales Bildsignal umgesetzt wird. Das digitale Bildsignal steht anschließend zur weiteren Verarbeitung und/oder zur Ausgabe auf einem Monitor, einem Drucker oder dergleichen zur Verfügung.

Die genannte EP 0 632 930 B1 beschreibt eine Bildzelle für einen Bildsensor, die sich insbesondere durch ihre weite logarithmische Abhängigkeit zwischen der Intensität einfallenden Lichts und der Größe der erzeugten analogen Bildsignale auszeichnet. Hierdurch ermöglicht der bekannte Bildsensor die kontrastreiche Aufnahme von Bildszenen mit extrem starken Helligkeitsunterschieden. Anders ausgedrückt besitzt der bekannte Bildsensor eine sehr große Dynamik. Diese ist vor allem auf die besondere Verschaltung des lichtempfindlichen Elements zurückzuführen, das mit einem MOS-Transistor derart gekoppelt ist, daß der vom lichtempfindlichen Element erzeugte Photostrom über die Source-Drain-Strecke des MOS-Transistors fließt. Das Gate des MOS-Transistors ist mit der Drain-Elektrode des MOS-Transistors kurzgeschlossen, was zu der gewünschten logarithmischen Abhängigkeit führt.

Unter bestimmten Betriebsbedingungen besitzt die bekannte Bildzelle jedoch noch Nachteile. Insbesondere ist bei einem schnellen Wechsel von einem Lichtsignal hoher Intensität zu einem Lichtsignal geringer Intensität (von hell zu dunkel) das Einschwingverhalten der Bildzelle relativ langsam. Dies hat zur Folge, daß beim Aufnehmen eines hellen bewegten Objektes vor einem dunklen Hintergrund sogenannte Nachzieheffekte auftreten, die sich bei einer schnellen Bildfolge in Form eines kometenschweifähnlichen, jedoch tatsächlich in der Bildszene nicht vorhandenen Lichteffektes bemerkbar machen.

In der EP 0 935 880 B1 ist eine Schaltungsanordnung beschrieben, mit der dieser Nachzieheffekt unterdrückt werden kann. Die aus der EP 0 632 930 B1 bekannte Bildzelle wird hiernach um einen weiteren MOS-Transistor ergänzt, der parallel zu dem bereits erwähnten MOS-Transistor angeordnet ist. Über den weiteren MOS-Transistor kann eine Art Reset-Spannungsimpuls angelegt werden, mit dem überschüssige Ladungen im Bereich des lichtempfindlichen Elements schnell abgebaut werden können. Diese überschüssigen Ladungen sind die Folge des schnellen Hell-Dunkel-Wechsels in der Bildszene.

Aus EP 0 414 109 A2 ist eine Vorrichtung bekannt, um eine Zeitverzögerung bei CCD-Bildsensoren zu reduzieren. Die Zeitverzögerung betrifft dabei den Ladungsaufbau und Ladungsabbau bei wechselnden Lichtverhältnissen. EP 0 414 109 A2 schlägt vor, mehrere Bildsensoren in einer Farbseparationseinheit mit Hilfe von mehreren LEDs zu beleuchten, wobei für jeden Bildsensor in der Farbseparationseinheit eine andersfarbige LED verwendet wird. Nähere Angaben zum Zeitverhalten finden sich in EP 0 414 109 A2 nicht.

US 3,925,657 schlägt vor, einen CCD-Bildsensor auf seiner Rückseite mit einer Lichtquelle zu beleuchten, um den unvollständigen Ladungstransfer zu reduzieren. Dabei kann eine Lichtquelle verwendet werden, die einen nennenswerten Anteil an Infrarotlicht beinhaltet. Angaben zum Zeitverhalten für diese Zusatzbeleuchtung finden sich jedoch ebenfalls nicht.

US 4,359,759 offenbart eine Zusatzbeleuchtung für eine radiografische Vorrichtung, die Bilder von einem mit Röntgenstrahlen beleuchteten Patienten aufnimmt. Vor dem Belichtungskörper aus Bleioxid ist eine ringförmige Lichtquelle angeordnet, um das Belichtungsziel in Ergänzung zu den Röntgenstrahlen zu beleuchten. In diesem Fall ist vorgeschlagen, die Lichtquelle jeweils auszuschalten, wenn ein Bild von dem Belichtungsziel aufgenommen wird.

Es ist Aufgabe der vorliegenden Erfindung, eine alternative Möglichkeit anzugeben, mit der die beschriebenen Nachzieheffekte bei einem Bildsensor mit Bildzellen der eingangs genannten Art wirkungsvoll reduziert werden können, wobei die Dunkelempfindlichkeit der Bildzellen beibehalten werden soll.

Diese Aufgabe wird durch ein Kameramodul mit einem Bildsensor der eingangs genannten Art gelöst, bei dem im Bereich des Bildsensors eine Lichtquelle angeordnet ist, um die Bildzellen anzuleuchten, wenn eine vorhandene Grundhelligkeit einen ersten Schwellwert überschreitet.

Die Aufgabe wird ferner durch ein Verfahren der eingangs genannten Art gelöst, bei dem die lichtempfindliche Elemente der Bildzellen mit einer im Bereich der Bildzellen angeordneten Lichtquelle angeleuchtet werden, wenn eine vorhandene Grundhelligkeit einen ersten Schwellwert überschreitet.

Die Verwendung von Lichtquellen in Form von Blitzlichtgeräten, Scheinwerfern und dergleichen ist beim Aufnehmen von Bildern an sich hinlänglich bekannt. Derartige Lichtquellen dienen jedoch stets dazu, die mit der Kamera aufgenommene Bildszene aufzuhellen und/oder zu beleuchten. Im Unterschied dazu werden hier die Bildzellen des Bildsensors angeleuchtet, d.h. die Bildzellen werden mit der Lichtquelle mehr oder weniger direkt bestrahlt. Dies schließt nicht aus, daß das Licht der Lichtquelle über Spiegel, Prismen oder andere optische Elemente zu den Bildzellen des Bildsensors hingeführt wird. Charakteristisch ist jedoch, daß mit der Lichtquelle nicht die betrachtete Bildszene, sondern die Bildzellen des Bildsensors gezielt und unabhängig von der Bildszene beleuchtet werden.

Durch das gezielte Beleuchten der Bildzellen mit einer entsprechend ausgerichteten Lichtquelle wird in den Bildzellen ein zusätzlicher Photostrom erzeugt. Technisch ausgedrückt können die Bildzellen durch die gezielte Beleuchtung optisch auf einen veränderten Arbeitspunkt vorgespannt werden. Es hat sich gezeigt, daß die Zeitkonstante der Bildzellen beim Einschwingen auf neue Beleuchtungsverhältnisse von der Lage des Arbeitspunktes und damit von der Höhe des vorhandenen Photostroms abhängt. Je höher der Photostrom ist, desto schneller reagieren die Bildzellen auf Veränderungen. Kurioserweise kann durch Zuführen zusätzlichen Lichts daher auch die Reaktionszeit beim Einschwingen nach einem Hell-Dunkel-Wechsel verkürzt werden.

Mit anderen Worten kann der aus der EP 0 935 880 B1 bekannte weitere MOS-Transistor, der als eine Art Reset-Schalter arbeitet, durch eine gezielte Beleuchtung der Bildzellen mit einer externen Lichtquelle ersetzt (oder ggf. ergänzt) werden. Die (externe) Lichtquelle dient praktisch als optischer Resetschalter. Insbesondere kann durch das gezielte Beleuchten der Bildzellen nach einem abrupten Hell-Dunkel-Wechsel die Zeitkonstante zum Abbauen der in den lichtempfindlichen Elementen vorhandenen elektrischen Ladungen verkürzt werden, wodurch die oben beschriebenen Nachzieheffekte wirkungsvoll unterdrückt werden.

Allerdings werden die Bildzellen nur dann mit der zusätzlichen Lichtquelle beleuchtet, wenn eine gewissen Grundhelligkeit vorhanden ist. Die Grundhelligkeit ist die Voraussetzung für einen Hell-Dunkel-Wechsel, bei dem Nachzieheffekte besonders stark hervortreten. Durch die genannte Maßnahme wird die zusätzliche Lichtquelle gerade für diesen Anwendungsfall optimiert. Andererseits wird durch diese Maßnahme die Dunkelempfindlichkeit der Bildzellen beibehalten.

Die genannte Aufgabe ist daher vollständig gelöst.

Darüber hinaus besitzt die hier vorgeschlagene Lösung den Vorteil, daß mit einer einzigen Lichtquelle eine Vielzahl von Bildzellen gleichzeitig entladen werden können, so daß im Gegensatz zu der Lösung gemäß der EP 0 935 880 B1 nicht für jede Bildzelle eine gesonderte Reset-Funktion realisiert werden muß. Außerdem kann die hier vorgeschlagene Lösung auch bei bereits vorhandenen, älteren Kameramodulen nachgerüstet werden, da kein Eingriff in das physikalische Layout der Bildzellen erforderlich ist.

Gemäß einem bevorzugten Ausführungsbeispiel gibt die Lichtquelle eine Strahlung im nicht-sichtbaren Spektralbereich ab, vorzugsweise im Infrarotbereich, und besonders bevorzugt im Bereich um 880 Nanometern Wellenlänge.

Durch diese Maßnahme lassen sich unerwünschte Nebeneffekte und eventuelle Störungen aufgrund der zusätzlichen Lichtquelle leichter reduzieren. Die Strahlung der zusätzlichen Lichtquelle kann durch entsprechende Filter leicht von Strahlung im aufzunehmenden sichtbaren Spektralbereich getrennt werden. Außerdem wird ein Anwender des neuen Kameramoduls durch das Licht der zusätzlichen Lichtquelle selbst dann nicht gestört oder verunsichert, wenn die zusätzliche Lichtquelle nicht vollständig nach außen hin abgedichtet ist.

Gemäß einem weiteren bevorzugten Ausführungsbeispiel ist die Lichtquelle ortsfest in das Kameramodul integriert.

Durch diese Ausgestaltung wird eine kompakte Baueinheit geschaffen, die einen leichteren Umgang mit dem neuen Kameramodul ermöglicht. Darüber hinaus kann die Lichtquelle hierdurch bei der Herstellung des Kameramoduls exakt und dauerhaft so positioniert und ausgerichtet werden, daß optimale Ergebnisse erreicht werden. Unerwünschte Nebeneffekte und eventuelle Störungen durch die Lichtquelle können frühzeitig festgestellt und beseitigt werden.

In einer weiteren Ausgestaltung umgibt die Lichtquelle den Bildsensor ringförmig.

Durch diese Ausgestaltung wird eine besonders homogene Beleuchtung des Bildsensors mit seiner Vielzahl von Bildzellen erreicht, ohne daß die Lichtquelle die eigentliche Bildaufnahme behindert. Gemäß einem besonders bevorzugten Ausführungsbeispiel beinhaltet die Lichtquelle beispielsweise einen kreisringförmigen Lichtleiter, der an zwei diametral einander gegenüberliegenden Punkten mit Licht gespeist wird und dieses dann kreisringförmig um den Bildsensor herum abstrahlt. Je nach Anwendungsfall kann die Lichtquelle den Bildsensor jedoch auch rechteckig und/oder auch nur bereichsweise, beispielsweise kreisabschnittsweise, umgeben.

In einer weiteren Ausgestaltung sind der Bildsensor und die Lichtquelle auf einem gemeinsamen Bauteilträger, insbesondere einer gemeinsamen Platine, angeordnet.

Diese Ausgestaltung ist besonders vorteilhaft, wenn die Lichtquelle in Form von Leuchtdioden in SMD-Technologie (surface mounted devices) realisiert ist. Die Ausrichtung der Lichtquelle in Bezug auf den Bildsensor läßt sich hierdurch sehr robust und andererseits raumsparend realisieren. Darüber hinaus ist die Ausrichtung der Lichtquelle in Bezug auf den Bildsensor in dieser Ausgestaltung unabhängig von einer verwendeten Kameraoptik, was eine große Anwendungsbreite ermöglicht.

In einer weiteren Ausgestaltung beinhaltet das Kameramodul ein Zeitglied, das die Lichtquelle in Abhängigkeit von den Bildsignalen für eine festgelegte Zeitdauer aktiviert.

Diese Ausgestaltung ist eine technisch besonders einfache Möglichkeit, um die eingangs beschriebene Reset-Funktion mit Hilfe der zusätzlichen Lichtquelle zu realisieren. Besonders bevorzugt aktiviert das Zeitglied die Lichtquelle für eine festgelegte Zeitdauer immer dann, wenn ein bestimmter, festgelegter Helligkeitswert überschritten wird. Hierdurch wird die Reset-Funktion nämlich bereits vor einem zu erwartenden Hell-Dunkel-Wechsel aktiviert.

In einer weiteren Ausgestaltung besitzt das Kameramodul eine Steuereinrichtung, die die Lichtquelle derart ansteuert, daß die Bildsignale der einzelnen Bildzellen eine mittlere Lichtintensität repräsentieren, die um etwa das 5fache bis 200fache höher ist als ohne Lichtquelle, bevorzugt um etwa das 10fache bis 100fache.

Es hat sich bei praktischen Versuchen gezeigt, daß eine Anhebung der mittleren Lichtintensität in den genannten Größenordnungen besonders gute Resultate liefert. Gute Resultate lassen sich mit den angegebenen Werten insbesondere dann erreichen, wenn die Lichtintensität ohne die zusätzliche Beleuchtung im Bereich der Dunkelstromgrenze der einzelnen Bildzellen liegt. Die entsprechende Ansteuerung der Lichtquelle läßt sich beispielsweise in einem Regelkreis dadurch realisieren, daß die ausgelesenen Bildsignale mit Hilfe eines Grauwert-Histogramms ausgewertet werden, wie weiter unten näher erläutert ist.

Gemäß einem weiteren Ausführungsbeispiel der Erfindung werden die elektrischen Bildsignale der Bildzellen in voneinander getrennten, ersten Zeitabschnitten ausgelesen und die lichtempfindlichen Elemente der Bildzellen werden in von einander getrennten, zweiten Zeitabschnitten angeleuchtet, wobei die ersten und zweiten Zeitabschnitte verschieden voneinander sind. Dies läßt sich mit Hilfe einer entsprechend ausgebildeten Steuereinrichtung realisieren.

Hiernach erfolgt die zusätzliche Beleuchtung der Bildzellen nur dann, wenn keine Bildinformationen ausgelesen werden. Die aufgenommenen Bilder sind daher weitgehend unbeeinflußt von der zusätzlichen Lichtquelle, was zu einer weiteren Verbesserung der Bildqualität beiträgt. In besonders bevorzugten Ausführungsbeispielen werden die Bildsignale zeilenweise ausgelesen und die Beleuchtung der Bildzellen erfolgt während eines Zeilenwechsels und/oder während eines Bildwechsels. In einem anderen Ausführungsbeispiel wird die Bildrate, d.h. die Häufigkeit, mit der die Bildsignale ausgelesen werden, halbiert und die gewonnene Zeit wird genutzt, um die Bildzellen geeignet zu beleuchten.

In einer weiteren Ausgestaltung werden die lichtempfindlichen Elemente nur angeleuchtet, wenn sich die Bildsignale aus aufeinanderfolgend ausgelesenen ersten Zeitabschnitten um mehr als einen (zweiten) Schwellwert voneinander unterscheiden.

Auch durch diese Maßnahme lassen sich Nachzieheffekte wirkungsvoll unterdrücken, ohne Störungen oder unerwünschte Nebeneffekte durch die zusätzliche Beleuchtung hervorzurufen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein vereinfachtes elektrisches Schaltbild einer Bildzelle mit zusätzlicher Lichtquelle,
- Fig. 2: ein vereinfachtes Blockschaltbild zur Erläuterung der Funktionsweise des neuen Kameramoduls,
- Fig. 3: eine teilweise geschnittene, schematische Darstellung eines neuen Kameramoduls in einer Querschnittsansicht,
- Fig. 4: eine Skizze zur Erläuterung des Nachzieheffektes,
- Fig. 5: zwei Histogramme zur Erläuterung eines Ausführungsbeispiels des erfindungsgemäßen Verfahrens,
- Fig. 6: eine schematische Darstellung eines Ausführungsbeispiels des neuen Kameramoduls in einer Draufsicht, und
- Fig. 7: Impulsdiagramme zur Erläuterung eines weiteren Ausführungsbeispiels des erfindungsgemäßen Verfahrens.

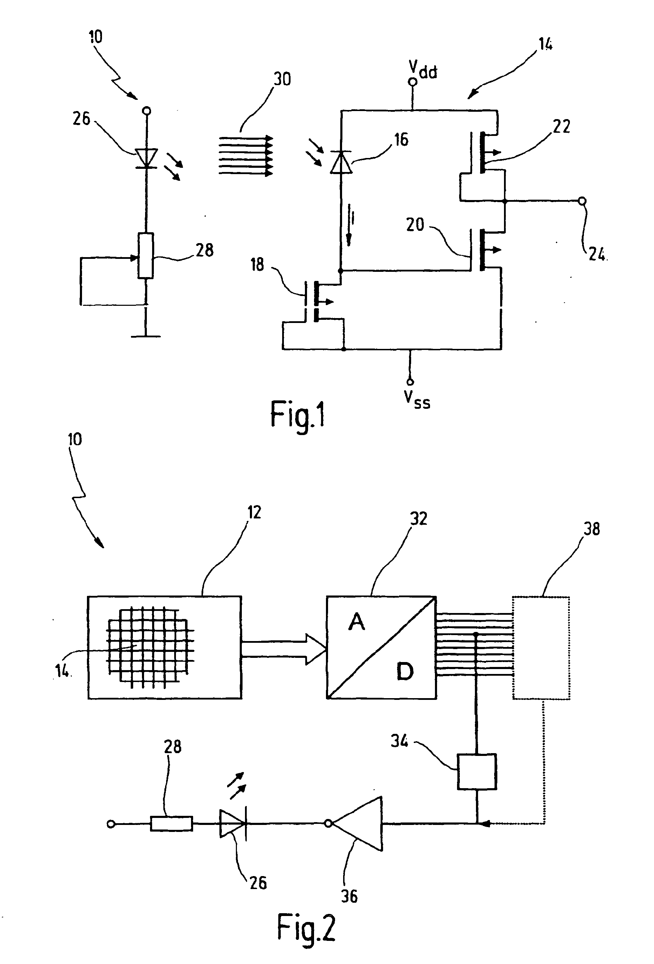

In den Figuren 1 und 2 ist ein erfindungsgemäßes Kameramodul in seiner Gesamtheit mit der Bezugsziffer 10 bezeichnet.

Das Kameramodul 10 beinhaltet einen Bildsensor 12 (Fig. 2) mit einer Vielzahl einzelner Bildzellen 14, die matrixartig nebeneinander angeordnet sind. In Fig. 1 ist stellvertretend für alle Bildzellen 14 ein vereinfachtes elektrisches Schaltbild einer einzelnen Bildzelle dargestellt.

Die Bildzelle 14 beinhaltet ein lichtempfindliches Element 16, das hier, wie üblich, als Photodiode dargestellt ist. Gemäß einem bevorzugten Ausführungsbeispiel ist das lichtempfindliche Element 16 als Bestandteil des ersten MOS-Transistors 18 realisiert bzw. in diesen integriert, wie dies in der EP 0 632 930 B1 ausführlich beschrieben ist. Abweichend hiervon kann das lichtempfindliche Element 16 im Rahmen der vorliegenden Erfindung jedoch auch separat von dem ersten MOS-Transistor 18 realisiert sein. Es ist grundsätzlich auch nicht auf die Realisierung als Photodiode beschränkt.

Das lichtempfindliche Element 16 und der erste MOS-Transistor 18 sind derart zueinander angeordnet, daß der vom lichtempfindlichen Element 16 erzeugte Photostrom I über die Source-Drain-Strecke des MOS-Transistors 18 fließt. Dem entsprechend sind die Anode des lichtempfindlichen Elements 16 und der MOS-Transistor 18 hier seriell zueinander angeordnet. Der Gate-Anschluß des MOS-Transistors 18 ist mit dem Drain-Anschluß kurzgeschlossen und liegt auf einem festen Potential V_{SS}. Durch diese besondere Verschaltung wird eine sehr exakte logarithmische Abhängigkeit zwischen der Intensität des einfallenden Lichts und der Größe der von der Bildzelle 14 erzeugten Bildsignale erreicht.

Mit den Bezugsziffern 20 und 22 sind ein zweiter und ein dritter MOS-Transistor bezeichnet, die ebenfalls Bestandteil der Bildzelle 14 sind. Der zweite MOS-Transistor 20 ist als Sourcefolger zu dem ersten MOS-Transistor 18 geschaltet. Dementsprechend ist der Gateanschluß des zweiten MOS-Transistors 20 mit dem Source-Anschluß des ersten MOS-Transistors 18 verbunden. Ferner ist der Drain-Anschluß des zweiten MOS-Transistors 20 mit dem Drain-Anschluß des ersten MOS-Transistors 18 verbunden.

Der dritte MOS-Transistor 22 liegt in Serie zum zweiten MOS-Transistor 20, wobei der Drain-Anschluß des dritten MOS-Transistors 22 mit dem Source-Anschluß des zweiten MOS-Transistors 20 verbunden ist. Der Gate-Anschluß des dritten MOS-Transistors 22 ist mit dessen Drain-Anschluß und folglich mit dem Source-Anschluß des zweiten MOS-Transistors 20 verbunden. An diesem Knotenpunkt befindet sich der Ausgang 24 der Bildzelle 14, an dem ein analoges Bildsignal abgegriffen werden kann. Der Source-Anschluß des dritten MOS-Transistors 22 liegt auf gleichem Potential, wie die Kathode des lichtempfindlichen Elements 16.

Mit der Bezugsziffer 26 ist eine Lichtquelle bezeichnet, die bevorzugt in Form einer Leuchtdiode realisiert ist. Die Lichtquelle 26 liegt in Serie zu einem verstellbaren Widerstand 28 (Potentiometer), mit dessen Hilfe die Helligkeit der Lichtquelle 26 eingestellt werden kann. Mit der Bezugsziffer 30 ist hier symbolisch die Strahlung bezeichnet, mit der die Lichtquelle 26 das lichtempfindliche Element 16 beleuchtet. Gemäß einem besonderen Ausführungsbeispiel handelt es sich dabei um eine Strahlung im Infrarotbereich mit einer Wellenlänge von 880 Nanometern, d.h. Leuchtdiode ist eine IR-Leuchtdiode, beispielsweise des Typs SFH484.

Wie in Fig. 2 gezeigt ist, ist der Bildsensor 12 mit einem A/D-Wandler 32 verbunden, der die analogen Bildsignale der Bildzellen 14 in digitale Bildsignale mit einer Breite von hier 10 Bit umsetzt. Damit stehen am Ausgang des A/D-Wandlers 2¹⁰ = 1024 verschiedene Bildsignalwerte zur Verfügung.

Außerdem sind gemäß einem ersten Ausführungsbeispiel ein Zeitglied 34 sowie ein Verstärker 36 vorgesehen, mit deren Hilfe die Lichtquelle 26 angesteuert wird. Das Zeitglied 34 ist hier an einen der Ausgangsanschlüsse des A/D-Wandlers 32 angeschlossen, beispielsweise an denjenigen Anschluß, an dem Bit Nr. 7 des 10-Bit-Ausgangssignals anliegt. Wenn dieses Bit den Wert 1 annimmt, wird das Zeitglied 34 aktiviert und infolgedessen über den Verstärker 36 die Lichtquelle 26 für eine fest eingestellte Zeitdauer aktiviert. Mit anderen Worten wird der Bildsensor 12 hiernach immer dann beleuchtet, wenn Bit Nr. 7 den Wert 1 annimmt, was einer bestimmten Grundhelligkeit entspricht.

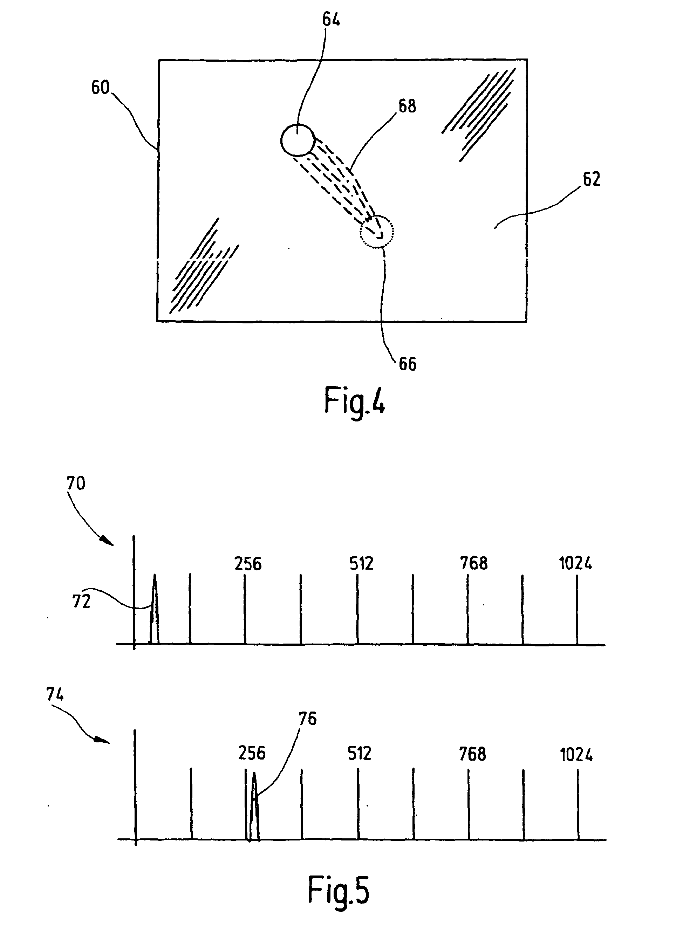

Gemäß einem weiteren Ausführungsbeispiel besitzt das Kameramodul 10 alternativ oder in Ergänzung zu dem Zeitglied 34 eine Steuereinrichtung 38, der die digitalen Bildsignale zugeführt sind. Mit Hilfe der Steuereinheit 38, die beispielsweise als digitaler Signalprozessor realisiert ist, kann die vom Bildsensor 12 aufgenommene Grundhelligkeit festgestellt werden. In Abhängigkeit davon läßt sich dann die Lichtquelle 26 variabel ansteuern. Insbesondere ist die Steuereinheit 38 in einem bevorzugten Ausführungsbeispiel so ausgelegt, daß die Bildsignale der einzelnen Bildzellen 14 eine mittlere Lichtintensität repräsentieren, die bei Beleuchtung mit der Lichtquelle 26 um etwa das 5fache bis 200fache höher ist als ohne Beleuchtung, bevorzugt um etwa das 10fache bis 100fache. Dies läßt sich beispielsweise mit Hilfe einer Histogrammauswertung realisieren, was nachfolgend anhand Fig. 5 erläutert ist.

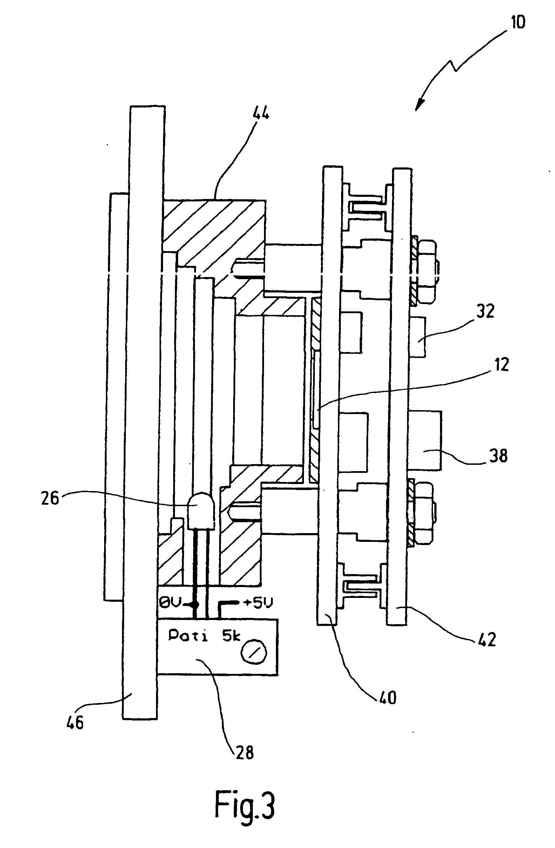

Anhand Fig. 3 sei jedoch zuvor ein bevorzugter mechanischer Aufbau des neuen Kameramoduls 10 beschrieben. Gleiche Bezugszeichen bezeichnen dabei dieselben Elemente wie zuvor.

Bei dem Kameramodul 10 ist der Bildsensor 12 zusammen mit einigen weiteren elektronischen Komponenten auf einer ersten Platine 40 angeordnet. Die weiteren elektronischen Komponenten beinhalten beispielsweise eine an sich bekannte Schaltung zur Korrektur des sogenannten Fixed Pattern Noise (FPN-Korrektur). Mit der Bezugsziffer 42 ist eine weitere Platine bezeichnet, die parallel zu der ersten Platine 40 in einem Abstand zu dieser befestigt ist. Auf der weiteren Platine 42 befinden sich u.a. der A/D-Wandler 32 sowie in einem Ausführungsbeispiel die Steuereinrichtung 38. Mit der Bezugsziffer 44 ist ein hier nur schematisch dargestellter Objektivtubus 44 in teilweise geschnittener Darstellung bezeichnet. Durch den Objektivtubus 44 hindurch nimmt der Bildsensor 12 einfallendes Licht auf. Der Objektivtubus 44 besitzt einen Außenkörper 46, an dem die Lichtquelle 26, der Widerstand 28 und eine geeignete Spannungsversorgung für die Lichtquelle 26 angeordnet sind. Die Lichtquelle 26 in Form einer Leuchtdiode ragt in den Objektivtubus 44 seitlich hinein. Dabei befindet sich die Lichtquelle 26 seitlich und, in Blickrichtung des Bildsensors 12 gesehen, etwas vor dem Bildsensor 12. Durch diese Anordnung ist die Lichtquelle 26 in der Lage, die Bildzellen 14 des Bildsensors 12 anzuleuchten, ohne die Aufnahme einer Bildszene zu stören.

In Fig. 4 ist ein Beispiel für den Nachzieheffekt skizziert, der sich mit Hilfe des neuen Kameramoduls 10 vermeiden läßt. Ein aufgenommenes Bild ist in seiner Gesamtheit mit der Bezugsziffer 60 bezeichnet. Das Bild 60 besitzt einen dunklen Hintergrund 62, vor dem sich ein helles Objekt 64 bewegt. Mit der Bezugsziffer 66 ist die ursprüngliche Position des Objekts 64 bezeichnet. Ohne die Beleuchtung des Bildsensors 12 mit der zusätzlichen, externen Lichtquelle 26 würde sich bei schnell aufeinanderfolgend aufgenommenen Bildern 60 ein Kometenschweif 68 infolge der Bewegung des Objektes 64 von der Position 66 aus ergeben. Dieser Kometenschweif 68 läßt sich mit Hilfe der Lichtquelle 26 soweit reduzieren, daß trotz der Bewegung nur das helle Objekt 64 sichtbar ist.

Nachgewiesen wurde dieser Erfolg beispielsweise mit Hilfe einer Lochblende, die vor einer hellen Lichtquelle bewegt wurde, wobei die sich ergebenden Bilder mit Hilfe des neuen Kameramoduls 10 aufgenommen wurden. Das Loch in der Lochblende zeigt sich in dem aufgenommenen Bild 60 als helles Objekt 64, während der restliche Teil der Lochblende den dunklen Hintergrund 62 bildet. Der Erfolg der hier vorgeschlagenen Lösung läßt sich mit einer entsprechenden Anordnung nachvollziehen.

In Fig. 5 sind zwei Histogramme dargestellt, deren Auswertung einem bevorzugten Ausführungsbeispiel zugrunde liegt. Die beiden Histogramme besitzen eine Skala von 0 - 1024, was dem 10-Bit breiten digitalen Datenwort am Ausgang des A/D-Wandlers entspricht. Der Skalenwert 0 entspricht einer Situation, bei der die vom A/D-Wandler 32 gelieferten digitalen Bildsignale 0 sind, was absoluter Dunkelheit entspricht. Gleichermaßen entspricht der Skalenwert 1024 dem Maximalwert des A/D-Wandlers 32, was maximale Helligkeit bedeutet, wobei diese Maximalwerte bei einer logarithmischen Bildzelle selten oder nie erreicht werden.

Im oberen Histogramm 70 ist ein Peak 72 angedeutet. Ein solches Histogramm ergibt sich, wenn mit dem Kameramodul 10 eine Bildszene bei Dunkelheit ohne weitere Zusatzbeleuchtung aufgenommen wird. Der Peak 72 liegt im Bereich des Dunkelstroms der Bildzelle. Seine Breite entspricht der statistischen Streuung des Dunkelstromrauschens etc.

Das Histogramm 74 zeigt eine vergleichbare Situation, wobei der Bildsensor 12 hier mit der Lichtquelle 26 beleuchtet wird. Der Peak 76 wird hierdurch zu höheren Werten verschoben, hier beispielsweise zu Werten um ca. 270.

Mit Hilfe der Steuereinrichtung 38 kann die Beleuchtung des Bildsensors 12 individuell eingestellt werden, indem die Histogramme von aufeinanderfolgend ausgelesenen Bildsignalen gebildet und ausgewertet werden. Dabei ist es insbesondere möglich, die Lichtquelle 26 derart anzusteuern, daß die Lichtintensität der vom Bildsensor 12 erzeugten Bildsignale etwa um den Faktor 10 bis 100 höher liegt als ohne entsprechende Zusatzbeleuchtung. Eine derartige Ansteuerung hat sich als besonders vorteilhaft erwiesen, um die oben beschriebenen Nachzieheffekte zu unterdrücken, ohne die Dunkelempfindlichkeit der Bildzellen zu stark zu beeinträchtigen.

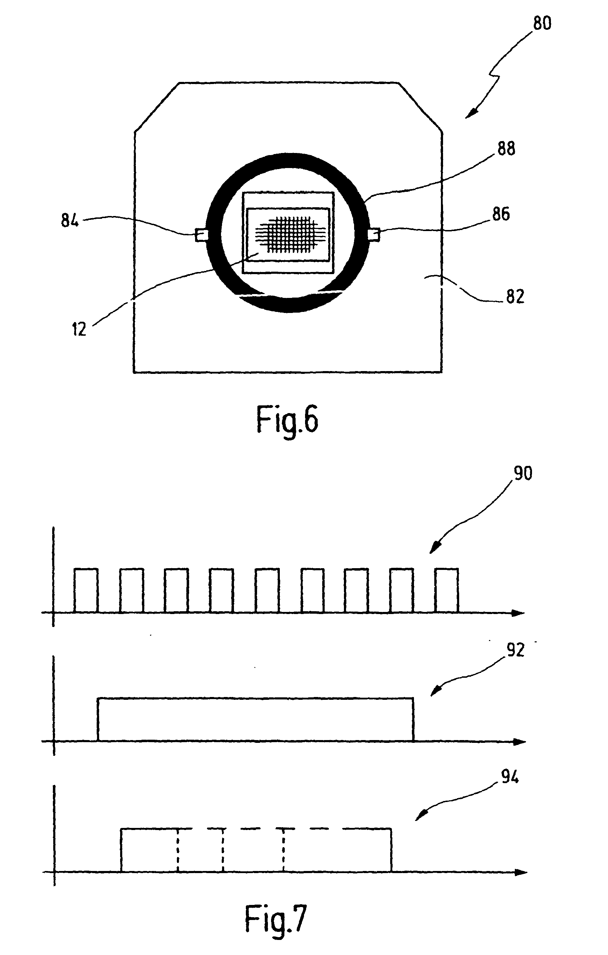

In Fig. 6 ist ein weiteres vorteilhaftes Ausführungsbeispiel des neuen Kameramoduls in seiner Gesamtheit mit der Bezugsziffer 80 bezeichnet. Das Kameramodul 80 besitzt wiederum den Bildsensor 12, der hier auf einer Platine 82 angeordnet ist. Ebenfalls auf der Platine 82 angeordnet sind zwei Leuchtdioden 84, 86, die hier in SMD-Technologie ausgeführt sind. Außerdem sind die beiden Leuchtdioden 84, 86 mit einem Plexiglasring 88 verbunden, der den Bildsensor 12 ringförmig umgibt. Der Plexiglasring 88 wirkt als semidurchlässiger Lichtverteiler und führt zu einer besonders homogenen Beleuchtung des Bildsensors 12.

Fig. 7 zeigt einige Impulsdiagramme bei der Ansteuerung des Bildsensors 12. Ein erster Impulszug 90 zeigt den sogenannten Pixeltakt, d.h. ein Taktsignal, mit dem die Bildsignale der einzelnen Bildzellen 14 der Reihe nach an den A/D-Wandler 32 übertragen werden. Ein zweiter Impulszug 92 zeigt im Vergleich dazu ein Steuersignal, das in der Fachterminologie als Line Enable bezeichnet wird (hier in negativer Logik). Alternativ könnte es sich hier auch um ein anderes Steuersignal handeln, das als Frame Enable bekannt ist. Diese Steuersignale sind aktiv, wenn die Bildsignale einer Zeile des Bildsensors 12 ausgelesen werden (Line Enable) bzw. während die Bildsignale aller Bildzellen 14 ausgelesen werden (Frame Enable).

Ein dritter Impulszug 94 zeigt, in welchem zeitlichen Verhältnis hierzu die Lichtquelle 26 angesteuert wird. Gemäß einem bevorzugten Ausführungsbeispiel geschieht dies pulsweise, und zwar bevorzugt dann, wenn anhand des zweiten Impulszuges 92 erkannt wird, daß gerade keine Bildsignale ausgelesen werden. Anders ausgedrückt wird die Lichtquelle 26 hiernach jeweils nur dann aktiviert, wenn der Bildsensor 12 gerade keine Bildsignale liefert. Damit wird eine Beeinflussung des ausgelesenen Bildes durch die Lichtquelle 26 vermieden.

Gemäß einem weiteren bevorzugten Ausführungsbeispiel erfolgt die Ansteuerung der Lichtquelle 26 mit einer variablen Pulslänge, was bei dem Impulszug 94 durch die gestrichelte Linie angedeutet ist. Dies entspricht dem bereits weiter oben beschriebenen Ausführungsbeispiel, wonach die Ansteuerung der Lichtquelle 26 beispielsweise in Abhängigkeit von den Histogrammwerten der Bildsignale erfolgt. Darüber hinaus kann auch die Helligkeit der Lichtquelle 26 gesteuert oder geregelt sein, was durch das Potentiometer 28 angedeutet ist.

Des weiteren kann die Steuereinrichtung 38 durch Auswerten der Bildsignale auch feststellen, ob bei zwei oder mehr aufeinanderfolgenden Bildern starke Helligkeitsunterschiede auftreten. Gemäß einem weiteren bevorzugten Ausführungsbeispiel wird die Lichtquelle 26 nur dann aktiviert, wenn Helligkeitsunterschiede oberhalb einer gewissen Schwelle auftreten. Anders ausgedrückt wird die Lichtquelle 26 hiernach nicht aktiviert, wenn sich die Helligkeitswerte zwischen zwei oder mehr aufeinanderfolgenden Bildern nur geringfügig ändern. In diesem Fall besteht nicht die Gefahr von sichtbaren Nachzieheffekten, so daß die Lichtquelle 26 dann nicht benötigt wird.

## Patentansprüche

1. Kameramodul zur elektronischen Aufnahme von Bildern, mit einem Bildsensor (12) mit einer Vielzahl von Bildzellen (14), die abhängig von der Intensität einfallenden Lichts jeweils ein elektrisches Bildsignal liefern, wobei jede Bildzelle (14) ein lichtempfindliches Element (16) zum Erzeugen eines lichtabhängigen Stroms sowie zumindest einen seriell dazu angeordneten MOS-Transistor (18) aufweist, dessen Gate auf einem festen Potential liegt und dessen Source-Drain-Strecke von dem lichtabhängigen Strom durchflossen wird, **dadurch gekennzeichnet, daß** im Bereich des Bildsensors (12) zumindest eine Lichtquelle (26; 84, 86, 88) angeordnet ist, um die Bildzellen (14) anzuleuchten, wenn eine vorhandene Grundhelligkeit einen ersten Schwellwert überschreitet.

2. Kameramodul nach Anspruch 1, **dadurch gekennzeichnet, daß** die Lichtquelle (26; 84, 86, 88) eine Strahlung im nicht-sichtbaren Spektralbereich abgibt, vorzugsweise im Infrarotbereich, und besonders bevorzugt im Bereich um 880 nm Wellenlänge.

3. Kameramodul nach Anspruch 1 oder 2, **dadurch gekennzeichnet, daß** die Lichtquelle (26; 84, 86, 88) ortsfest in das Kameramodul integriert ist.

4. Kameramodul nach einem der Ansprüche 1 bis 3, **dadurch gekennzeichnet, daß** die Lichtquelle (84, 86, 88) den Bildsensor (12) ringförmig umgibt.

5. Kameramodul nach einem der Ansprüche 1 bis 4, **dadurch gekennzeichnet, daß** der Bildsensor (12) und die Lichtquelle (84, 86, 88) auf einem gemeinsamen Bauteilträger (82), insbesondere einer gemeinsamen Platine, angeordnet sind.

6. Kameramodul nach einem der Ansprüche 1 bis 5, **gekennzeichnet durch** ein Zeitglied (34), das die Lichtquelle (26, 84, 86, 88) in Abhängigkeit von den Bildsignalen für eine festgelegte Zeitdauer (94) aktiviert.

7. System eines Kameramoduls nach einem der Ansprüche 1 bis 6, und einer Steuereinrichtung, **dadurch gekennzeichnet, dass** die Steuereinrichtung (38) die Lichtquelle (26; 84, 86, 88) derart ansteuert, daß die Bildsignale der einzelnen Bildzellen (14) eine mittlere Lichtintensität repräsentieren, die um etwa das 5fache bis 200fache höher ist als ohne die Lichtquelle (26; 84, 86, 88), bevorzugt um etwa das 10fache bis 100fache.

8. Verfahren zum elektronischen Aufnehmen von Bildern mit einem Bildsensor (12), der eine Vielzahl von Bildzellen (14) besitzt, mit den Schritten:
- Erzeugen eines lichtabhängigen Stroms mit Hilfe eines lichtempfindlichen Elements (16) in jeder der Bildzellen (14),
- Erzeugen eines elektrischen Bildsignals in jeder der Bildzellen (14) mit Hilfe eines seriell zu dem lichtempfindlichen Element (16) angeordneten MOS-Transistors (18), dessen Gate auf einem festen Potential liegt und dessen Source-Drain-Strecke von dem lichtabhängigen Strom durchflossen wird, und
- Auslesen der elektrischen Bildsignale aller Bildzellen (14),
**dadurch gekennzeichnet, daß** die lichtempfindlichen Elemente (16) der Bildzellen (14) mit einer im Bereich der Bildzellen (14) angeordneten Lichtquelle (26; 84, 86, 88) angeleuchtet werden, wenn eine vorhandene Grundhelligkeit einen ersten Schwellwert überschreitet.

9. Verfahren nach Anspruch 8, **dadurch gekennzeichnet, daß** die elektrischen Bildsignale der Bildzellen (14) in voneinander getrennten, ersten Zeitabschnitten (92) ausgelesen werden und daß die lichtempfindlichen Elemente (16) der Bildzellen (14) in voneinander getrennten, zweiten Zeitabschnitten (94) angeleuchtet werden, wobei die ersten und zweiten Zeitabschnitte verschieden voneinander sind.

10. Verfahren nach Anspruch 8 oder 9, **dadurch gekennzeichnet, daß** die lichtempfindlichen Elemente (16) nur angeleuchtet werden, wenn sich die Bildsignale aus aufeinanderfolgend ausgelesenen ersten Zeitabschnitten um mehr als einen zweiten Schwellwert unterscheiden.

## Claims

1. Camera module for electronically recording images, having an image sensor (12) with a plurality of image cells (14), with each image cell providing an electric image signal as a function of an intensity of incident light, each image cell (14) having a light-sensitive element (16) for generating a light-dependent current and at least one MOS transistor (18) arranged in series therewith, a gate of the transistor being at a fixed potential and a source-drain path of the transistor being flowed through by the light-dependent current, **characterized in that** there is arranged at least one light source (26; 84, 86, 88) in the region of the image sensor (12) in order to illuminate the image cells (14), when an existing basic brightness exceeds a first threshold value.

2. Camera module according to Claim 1, **characterized in that** the light source (26; 84, 86, 88) outputs a radiation in the invisible spectral region, preferably in the infrared region, and with particular preference in the region about a wavelength of 880 nm.

3. Camera module according to Claim 1 or 2, **characterized in that** the light source (26; 84, 86, 88) is integrated in a stationary fashion in the camera module.

4. Camera module according to any of Claims 1 to 3, **characterized in that** the light source (84, 86, 88) surrounds the image sensor (12) in the shape of a ring.

5. Camera module according to any of Claims 1 to 4, **characterized in that** the image sensor (12) and the light source (84, 86, 88) are arranged on a common assembly carrier (82), in particular a common printed circuit board.

6. Camera module according to any of Claims 1 to 5, **characterized by** a timing element (34) which activates the light source (26, 84, 86, 88) as a function of the image signals for a fixed period of time (94).

7. System of a camera module according to any of Claims 1 to 6 and a control device, **characterized in that** the control device (38) controls the light source (26; 84, 86, 88) such that the image signals of the individual image cells (14) represent a mean light intensity which is higher by a factor of approximately 5 to 200 than without the light source (26; 84, 86, 88), preferably by a factor of approximately 10 to 100.

8. Method for electronically recording images by means of an image sensor (12) which has a plurality of image cells (14), the method comprising the following steps:
- generating a light-dependent current by means of a light-sensitive element (16) in each of the image cells (14),
- generating an electric image signal in each of the image cells (14) by means of an MOS transistor (18) which is arranged in series with the light-sensitive element (16) and whose gate is at a fixed potential and whose source-drain path is flowed through by the light-dependent current, and
- reading out the electric image signals of all the image cells (14),
**characterized in that** the light-sensitive elements (16) of the image cells (14) are illuminated by means of a light source (26; 84, 86, 88) arranged in the region of the image cells (14), when an existing basic brightness exceeds a first threshold value.

9. Method according to Claim 8, **characterized in that** the electric image signals of the image cells (14) are read out during first time intervals (92) which are separated from one another, and **in that** the light-sensitive elements (16) of the image cells (14) are illuminated during second time intervals (94) separated from one another, the first and second time intervals being different from one another.

10. Method according to Claim 8 or 9, **characterized in that** the light-sensitive elements (16) are illuminated only when the image signals from first time intervals that are consecutively read-out differ by more than a second threshold value.

## Revendications

1. Module de caméra pour la prise électronique d'images, comportant un capteur d'image (12) avec une pluralité de cellules d'image (14) qui fournissent à chaque fois un signal d'image électrique en fonction de l'intensité de la lumière entrant, chaque cellule d'image (14) comportant un élément photosensible (16), pour la production d'un courant dépendant de la lumière, ainsi qu'au moins un transistor MOS (18) disposé en série par rapport à cet élément, transistor dont la grille repose sur un potentiel fixe et dont la voie source-drain est traversée par le courant dépendant de la lumière, **caractérisé en ce qu'**est disposée au moins une source lumineuse (26 ; 84, 86, 88) au niveau du capteur d'image (12) afin d'allumer les cellules d'image (14) lorsqu'une luminosité du fond existante dépasse une première valeur seuil.

2. Module de caméra selon la revendication 1, **caractérisé en ce que** la source lumineuse (26 ; 84, 86, 88) émet un rayonnement dans la zone spectrale non visible, de préférence dans la zone infrarouge et de manière particulièrement préférée dans la zone de longueur d'onde 880 nm.

3. Module de caméra selon la revendication 1 ou 2, **caractérisé en ce que** la source lumineuse (24 ; 84, 86, 88) est intégrée de manière stationnaire dans le module de caméra.

4. Module de caméra selon l'une des revendications 1 à 3, **caractérisé en ce que** la source lumineuse (84, 86, 88) entoure de façon annulaire le capteur d'image (12).

5. Module de caméra selon l'une des revendications 1 à 4, **caractérisé en ce que** le capteur d'image (12) et la source lumineuse (84, 86, 88) sont disposés sur un support de composants commun (82), en particulier sur une platine commune.

6. Module de caméra selon l'une des revendications 1 à 5, **caractérisé par** un élément de temporisation (34) qui active la source lumineuse (26, 84, 86, 88) en fonction des signaux d'image pour une durée fixée (94).

7. Système d'un module de caméra selon l'une des revendications 1 à 6 et d'un dispositif de commande, **caractérisé en ce que** le dispositif de commande (38) commande la source lumineuse (26 ; 84, 86, 88) de telle sorte que les signaux d'image des différentes cellules d'image (14) représentent une intensité lumineuse moyenne qui est à peu près 5 à 200 fois plus élevée que sans la source lumineuse (26 ; 84, 86, 88), de préférence à peu près 10 à 100 fois plus élevée.

8. Procédé de prise d'images électronique comportant un capteur d'image (12) qui possède une multitude de cellules d'image (14), comprenant les étapes suivantes :
- production d'un courant dépendant de la lumière à l'aide d'un élément photosensible (16) dans chacune des cellules d'image (14),
- production d'un signal d'image électrique dans chacune des cellules d'image (14) à l'aide d'un transistor MOS (18) disposé en série par rapport à l'élément photosensible (16), transistor dont la grille repose sur un potentiel fixe et dont la voie source-drain est traversée par le flux dépendant de la lumière et
- lecture des signaux d'image électriques de toutes les cellules d'image (14),
**caractérisé en ce que** les éléments photosensibles (16) des cellules d'image (14) sont allumés avec une source lumineuse (26 ; 84, 86, 88) disposée au niveau des cellules d'image (14) lorsqu'une luminosité du fond existante dépasse une première valeur seuil.

9. Procédé selon la revendication 8, **caractérisé en ce que** les signaux d'image électriques des cellules d'image (14) sont lus dans des premiers intervalles temporels (92) séparés les uns des autres et **en ce que** les éléments photosensibles (16) des cellules d'image (14) sont allumés dans des seconds intervalles temporels (94) séparés les uns des autres, les premiers et les seconds intervalles temporels étant différents les uns des autres.

10. Procédé selon la revendication 8 ou 9, **caractérisé en ce que** les éléments photosensibles (16) ne sont allumés que lorsque les signaux d'image, de premiers intervalles temporels lus consécutivement, se différencient de plus d'une seconde valeur seuil.
